# EUROPEAN PATENT APPLICATION

(11) **EP 1 674 827 A1**
(43) Date of publication of application: **28.06.2006**
(21) Application number: 05028198.9
(22) Date of filing: 22.12.2005
(51) Int. Cl.: G01C 21/30

(54) **System for detecting a lane change of a vehicle**

(30) Priority: 24.12.2004 JP 2004373081; 06.01.2005 JP 2005001497
(71) Applicant: AISIN AW CO., LTD., Anjo-shi, Aichi 444-1192 (JP); Toyota Jidosha Kabushiki Kaisha, Toyota-shi Aichi-ken, 471-8571 (JP)
(72) Inventor: Morita, Hideaki Aisin AW Co., Ltd., Okazaki-shi Aichi 444-8564 (JP); Hasunuma, Makoto Aisin AW Co., Ltd., Okazaki-shi Aichi 444-8564 (JP); Ohashi, Yusuke Aisin AW Co., Ltd., Okazaki-shi Aichi 444-8564 (JP); Nakamura, Motohiro Toyota Jidosha Kabushiki Kaisha, Toyota-shi Aichi-ken 471-8571 (JP)
(74) Representative: Kramer - Barske - Schmidtchen

(57) **Abstract**

A system for detecting a lane change of a vehicle uses dead-reckoning navigation. The system monitors, based on the detected current position, a left-right position of the vehicle relative to a lane in which the vehicle is traveling. The system adds up an amount of movement in the left-right direction and detects a lane change by comparing the added up amount of movement with the lane's width.

## Description

The disclosure of Japanese Patent Applications No. 2004-373081 filed on December 24, 2004 and No. 2005-001497 filed on January 6, 2005 including the specifications drawings and abstracts are incorporated herein by reference in its entirety.

Related technical fields include current position information management systems, methods, and programs.

Conventional navigation systems that give guidance along a route to a destination detect a current position of a vehicle and display a map around the current position. Guidance is given relating to intersections and characteristic objects along the route. According to the conventional navigation systems, in order to detect the current position, a road map matching is performed based on map data and a calculated path that is obtained by dead-reckoning navigation using various sensor data from, for example, vehicle speed sensors, G (acceleration) meters, gyros, GPS sensors.

Japanese Patent Application Publication No. JP-A-2000-251197 and Japanese Patent Application Publication No. JP-A-2003-240581 disclose that when approaching an intersection in a route, each vehicle lane information of a plurality of intersections including the intersection to be passed is displayed, as well as directional arrows indicative of, for example, "straight ahead," "right turn," "left turn."

According to the above navigation apparatuses, when giving guidance at an intersection where the vehicle should turn, if the detection accuracy of the current position is low, a user may turn at a wrong intersection because the navigation apparatus believes that the vehicle is at a different intersection. This is especially true when two or more intersections are located close to each other along the route.

In conventional navigation systems, a current position may be recognized by dead-reckoning navigation and map matching, so errors are accumulated as a vehicle continues to travel along a road. Even if GPS is combined with the dead-reckoning information, positional error on the order of 10 meters may remain. Such positional error may accumulate until a vehicle turns left or right at an intersection, at which point the navigation system assumes the vehicle is at the intersection. That is, the error becomes the largest at the guidance intersection, just before a turn.

Further, in a route guidance, after recognizing that the vehicle has turned left or right at the guidance intersection (or the wrong intersection), the vehicle is guided along the remainder of the route. It can take additional time to confirm the left/right turn at the guidance intersection, resulting in delay in providing additional route guidance. Moreover, due to the positional error, when a road has multiple vehicle lanes, it is difficult to determine which lane the vehicle is traveling after turning left or right at the guidance intersection.

In view of at least the foregoing, it is beneficial to enable an easy detection of a lane change and in-lane position as well as a current position of a vehicle using dead-reckoning navigation, thereby enabling accurate recognition of the current position of the vehicle.

Various exemplar implementations of the principles described herein provide systems, methods, and programs for current position information management that may store map data and may detect a current position of a vehicle using dead-reckoning navigation. The systems, methods, and programs may monitor, based on the detected current position, a left-right position of the vehicle relative to a lane in which the vehicle is traveling. The systems, methods, and programs may add up an amount of movement in the left-right direction and detect a lane change by comparing the added up amount of movement with the lane's width.

Exemplary implementations will now be described with reference to the accompanying drawings, wherein:

FIG. 1 shows an exemplary vehicle current position information management system;

FIG. 2 shows an exemplary macro-matching processing portion;

FIG. 3 shows an exemplary a dead-reckoning navigation processing portion;

FIG. 4 shows an exemplary data structure;

FIG. 5 shows an exemplary micro-matching method using feature determination;

FIG. 6 shows an exemplary micro-matching method using lane determination;

FIG. 7 is a view showing an example of various features and paint;

FIG. 8 is a view illustrating the determination of the lane position, in-lane position, and crossing state;

FIG. 9 is a view illustrating a determination example of the lane position, in-lane position, and crossing state using a calculated path;

FIG. 10 is a view illustrating a determination example of the lane position, in-lane position, and crossing state using an optical beacon;

FIG. 11 shows an exemplary lane position correction method; and

FIG. 12 is a view illustrating a determination example of a movement direction at a narrow-angled branch point.

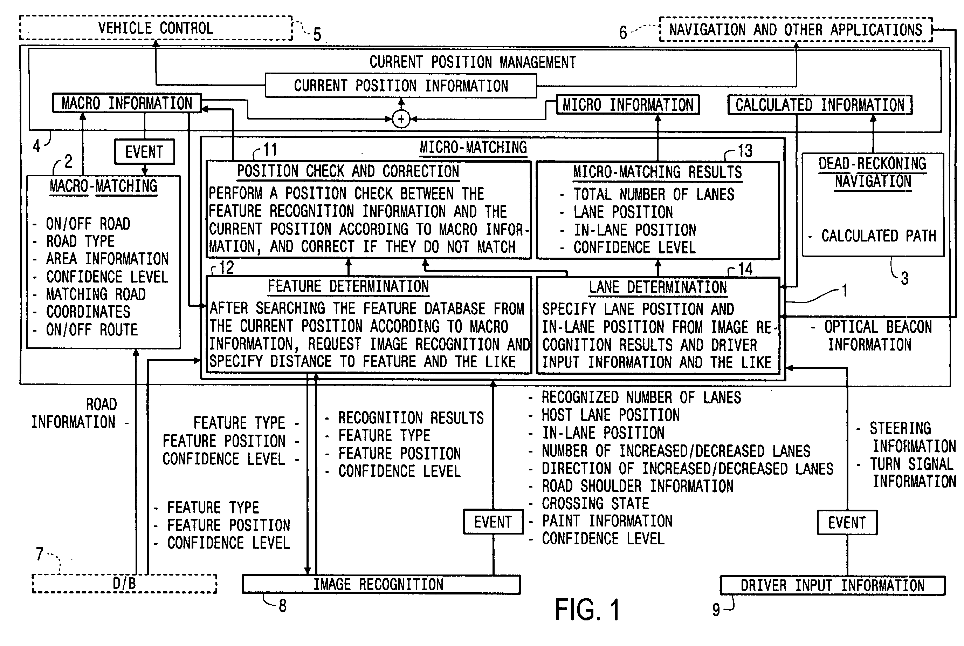

FIG. 1 is a block diagram showing an exemplary vehicle current position information management system. As shown in FIG. 1, exemplary vehicle current position information management system may physically, functionally, and or conceptually include a micro-matching processing portion 1, a macro-matching processing portion 2, a dead-reckoning navigation processing portion 3, a current position managing portion 4, a vehicle control unit 5, a vehicle information processing unit 6, a database 7, an image recognition device 8, a driver input information managing unit 9, a position checking and correcting portion 11, a feature determining portion 12, a micro-matching results portion 13, and a lane determining portion 14.

The dead-reckoning navigation processing portion 3 may obtain a calculated path by calculating the direction and distance of a host vehicle from various sensor data including, for example, vehicle speed data, G data, gyro data, GPS data. Based on the direction and distance the dead-reckoning navigation processing portion 3 may then calculate the host vehicle's current position. The dead-reckoning navigation processing portion 3 may manage the calculated path as well as the various sensor information as calculated information and may send it, for example, to the current position managing portion 4. The host vehicle position thus obtained may not exactly match a position of a road in the map data because the calculated path is obtained directly using the sensor data and has not yet been matched with the map data.

The macro-matching processing portion 2 may use a road map in a database 7 and a conventional calculated path obtained by the dead-reckoning navigation processing portion 3 as a base, and may more accurately determine which road the vehicle is traveling on using, for example, database information and/or new device information. The macro-matching processing portion 2 may manages, as macro information, information such as whether the vehicle is on the road or off the road, road type, area information, confidence level (e.g., degree of updatedness, reliability, accuracy, and degree of certainty regarding the information viewed from the time of update), matching road, coordinates, and whether the vehicle is on the route or off the route, and may send that macro information to the current position managing portion 4.

The micro-matching processing portion 1 may manage the detailed position of the host vehicle in a small area. The micro-matching processing portion 1 may perform feature determination based on image recognition and/or performs lane determination based on, for example, calculated information, optical beacon information, driver input information, and/or image recognition. The micro-matching processing portion 1 may perform a position check using the results of the lane determination and feature determination and may perform correction of the current position according to macro information. The micro-matching processing portion 1 may create and manage, as micro information, the in-lane position (i.e., the position of the vehicle in the lane), host lane position (i.e., the position of the lane, with respect to the road, in which the vehicle is traveling), and the total number of lanes from the micro-matching results. The micro-matching processing portion 1 may then send that micro information to the current position managing portion 4.

The feature information may include information about various structures relating to the road, such as, for example, traffic signals, overpasses, road signs, streetlights, poles, electrical poles, guard rails, road shoulders, sidewalk steps, medians, manholes in the road, and/or painted features (e.g., that indicating center lines, vehicle lanes, left/right turns, proceeding straight ahead, stop lines, bicycle crossings, crosswalks). Because the feature information has feature types, feature positions, their update times, and/or the reliability of the information itself as the confidence level (e.g., degree of updatedness, reliability, accuracy, and degree of certainty regarding the information viewed from the time of update), if a feature is recognized as a result of image recognition, the current position can be corrected with high accuracy based on the known position of that feature.

The current position managing portion 4 may manage, for example, micro information obtained by the micro-matching processing portion 1, macro information obtained by the macro-matching processing portion 2, and calculated information obtained by the dead-reckoning navigation processing portion 3, and may sends that information to the micro-matching processing portion 1 and the macro-matching processing portion 2 as appropriate. The current position managing portion 4 may also create current position information from the macro information and micro information, and may send it to the vehicle control unit 5 and the vehicle information processing unit 6.

The vehicle control unit 5 may perform vehicle running control such as, for example, speed control and brake control when cornering based on the current position information obtained by the current position managing portion 4. The vehicle information processing unit 6 may be a navigation system or VICS or other application system that displays the route by showing, for example, characteristic objects and intersections up to the destination based on current position information obtained by the current position managing portion 4. The database 7 may store data relating to the confidence level, the positions and types of features of each road, and various road data.

The image recognition device 8 may scan images in front (e.g. in the direction of travel) of the vehicle with, for example, a camera, may recognize paint information on the road, and/or may send, for example, the recognized number of lanes, host lane position, in-lane position, number of increased/decreased lanes, direction of increased/decreased lanes, road shoulder information, crossing state, paint information, and/or confidence level to the micro-matching processing portion 1 as an event. Moreover, the image recognition device 8 may perform recognition processing of features designated in accordance with a demand from the micro-matching processing portion 1 and may send those recognition results, feature types, feature positions, and/or confidence level to the micro-matching processing portion 1.

The driver input information managing portion 9 may detect, for example, with a steering angle sensor, a steering angle following an operation of a steering wheel by a driver, and/or may detect left-right turn commands from a direction indicator. The driver input information managing portion 9 may send the steering information and turn signal information to the micro-matching processing portion 1 as an event.

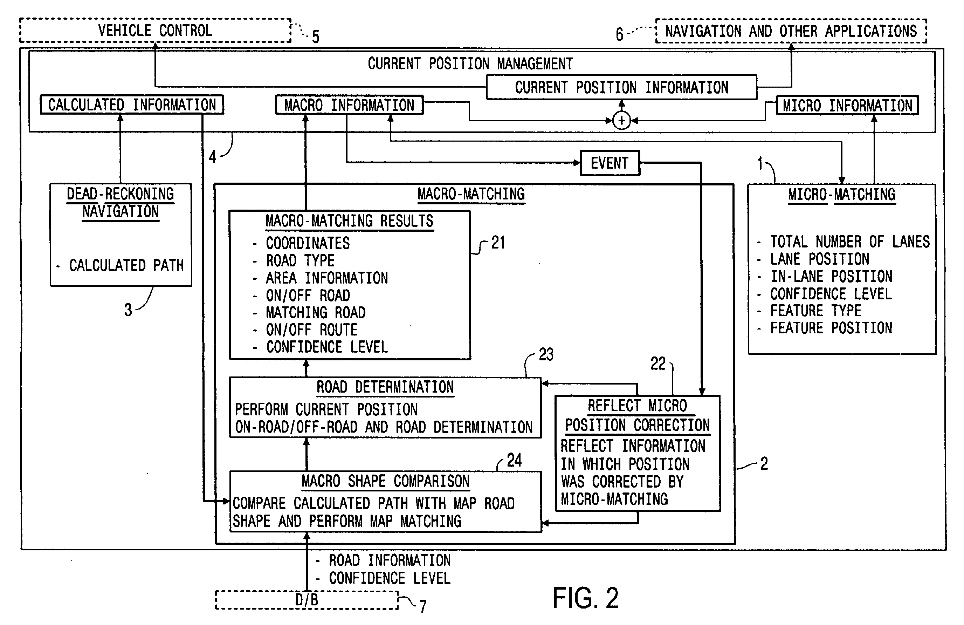

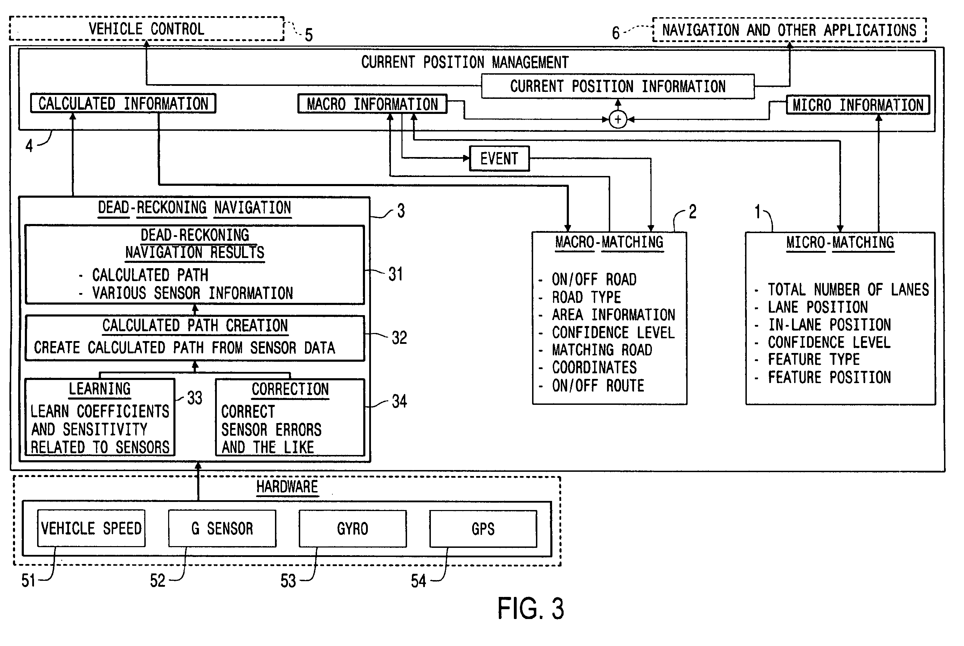

Examples of the micro-matching processing portion 1, the macro-matching processing portion 2, and the dead-reckoning navigation processing portion 3 will now be described in more detail with reference to FIGS. 1-3. FIG. 2 shows an exemplary macro-matching processing portion, and FIG. 3 shows an exemplary dead-reckoning navigation processing portion.

The micro-matching processing portion 1 may physically, functionally, and/or conceptually include a position checking and correcting portion 11, a feature determining portion 12, a micro-matching results portion 13, and/or a lane determining portion 14, as shown in FIG. 1. The feature determining portion 12 may search the database 7 for a feature, for example, based on the current position according to macro information, may request image recognition of that feature from the image recognition device 8 according to feature type, feature position, and confidence level, and may specify the distance to the feature, for example, based on the confidence level, feature position, feature type, and recognition results obtained from the image recognition device 8.

The lane determining portion 14 may specify the in-lane position and lane position of the host vehicle based, for example, on an event of the recognized number of lanes, position of the host lane within those lanes, in-lane position (e.g., whether the vehicle is toward the right or left in the lane), number of increased/decreased lanes, direction of increased/decreased lanes, road shoulder information (e.g., the existence or absence thereof), crossing state (e.g. whether the vehicle is crossing the lane/white line), paint information (e.g. indicators of straight ahead, left/right turns, crosswalks, and/or bicycle crossings), and confidence level from the image recognition device 8; an event of the steering information and turn signal information from the driver input information managing portion 9; the calculated information of the current position managing portion 4; and/or the optical beacon information of the vehicle information processing unit 6. The micro-matching processing portion 1 may send those determination results to the position checking and correcting portion 11 and the micro-matching results portion 13.

The position checking and correcting portion 11 may check the position using the feature recognition information of the feature determining portion 12 obtained by the feature determination, and further, the current position according to macro information, and the in-lane position and the lane position of the lane determining portion 14 obtained by the lane determination. If they do not match up, the position checking and correcting portion 11 may then correct the current position according to macro information to a current position calculated based on the feature recognition information. The micro-matching results portion 13 sends the micro information, e.g., the total number of lanes, the lane position, in-lane position and confidence level of the lane determining portion 14 obtained by the lane determination, to the current position managing portion 4.

When the recognition information of a manhole is obtained as a feature, for example, the position of the manhole and the distance to it are specified from the recognition data. As a result, if the current position according to macro information and the current position of the vehicle in the direction of travel obtained from that distance do not match up, the current position according to macro information can be corrected. Also, if the current position according to macro information and current position of the host vehicle do not match up due to the position of the manhole being toward the left, right, or center, the current position according to macro information can be corrected in the direction of the road width.

In the same way, according to lane determination, for example, when traveling on a two-lane road, if the host lane position is near the shoulder of the road and the in-lane position moves from the center of the lane toward the right and then the vehicle changes to the lane on the center line side, the current position according to macro information can be corrected if the current position of the host vehicle and the current position according to macro information do not match up. If the number of lanes changes, e.g., if a right turn lane newly appears on the right side or if the number of lanes decreases from three to two or from two to one, the current position according to macro information can be corrected by performing a match determination of that position.

As shown in FIG. 2The macro-matching processing portion 2 may physically, functionally, and/or physically include, for example, a macro-matching results portion 21, a micro position correction reflecting portion 22, a road determining portion 23, and/or a macro shape comparing portion 24. The macro shape comparing portion 24 may perform map matching, for example, by comparing the calculated path in the calculated information managed by the current position managing portion 4 with the map road shape based on the road information and confidence level of the database 7. The road determining portion 23 may determine whether the current position is on-road or off-road, and may perform a road determination at the current position.

The micro position correction reflecting portion 22 may reflect the correction information of the current position from the micro-matching processing portion 1 of the macro information in the current position according to the macro shape comparing portion 24 and the current position according to the road determining portion 23. The macro-matching results portion 21 may send, as macro information, for example, the coordinates, road type, area information, on-road/off-road, matching road, on-route/off-route, and/or confidence level to the current position managing portion 4 following a road determination by the road determining portion 23.

The dead-reckoning navigation processing portion 3 may physically, functionally, and/or conceptually include, for example, a dead-reckoning navigation results portion 31, a calculated path creating portion 32, a learning portion 33, and/or a correcting portion 34, as shown in FIG. 3. The dead-reckoning navigation processing portion 3 may obtain various information from a vehicle speed sensor 51, a G sensor 52, a gyro 53, and a GPS 54, may create a calculated path, and may send it, together with the various sensor information, to the current position managing portion 4 as calculated information. The learning portion 33 may learn the coefficient and sensitivity relating to each sensor. The correcting portion 34 may correct errors of the sensors. The calculated path creating portion 32 may create a calculated path of the vehicle from the various sensor data. The dead-reckoning navigation results portion 31 may send the created calculated path of the dead-reckoning navigation results and the various sensor information to the current position managing portion 4 as calculated information.

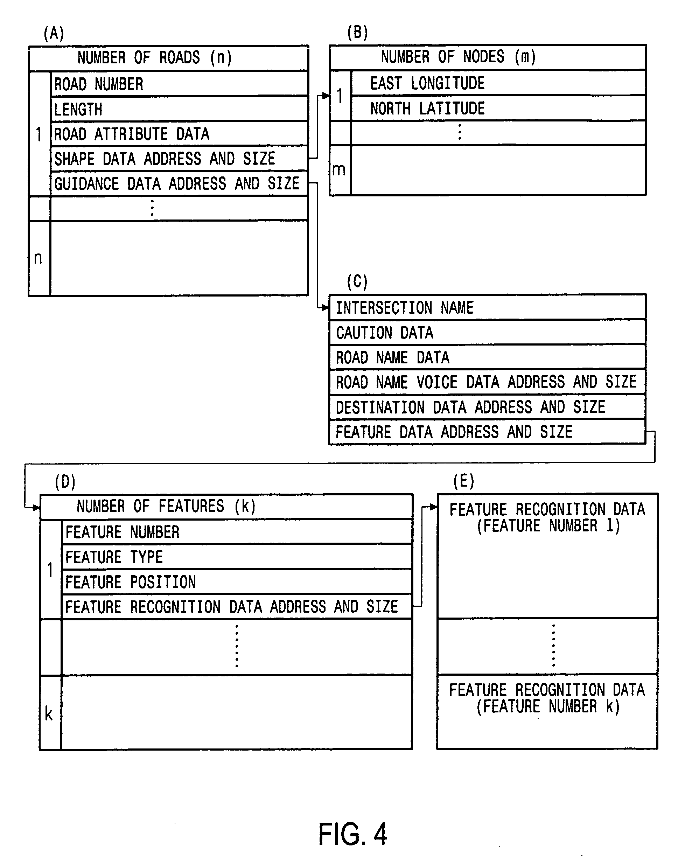

FIG. 4 shows an exemplary data structure. The guidance road data file may be stored in the database. As shown in FIG. 4(A), the guidance road data may include, for example, data for the road number, length, road attribute data, the size and address of shape data, and the size and address of guidance data for each of n number of roads of a route searched by a route search, and is obtained by a route search and stored as data necessary for performing route guidance.

As shown in FIG. 4(B), the shape data may include coordinate data made up of east longitude and north latitude for each of m number of nodes when each road is divided into a plurality of nodes. As shown in FIG. 4(C), the guidance data includes data for names of intersections (or branching points), caution data, road name data, sizes and addresses of road name voice data, sizes and addresses of destination data, and sizes and addresses of feature data.

Of these, the destination data, for example, may include destination road numbers, destination names, sizes and addresses of destination name voice data, destination direction data, and travel guidance data. Of the destination data, the destination direction data is data which indicates information regarding cancellation (e.g., not using destination direction data), unnecessity (e.g., no guidance), advance straight ahead, to the right, at an angle to the right, return to the right, to the left, at an angle to the left, and return to the left.

As shown in FIG. 4(D), the feature data may include, for example, feature number, feature type, feature position, and size and address of feature recognition data for each of k number of features on each road. As shown in FIG. 4(E), the feature recognition data may be data necessary for recognition by each feature, e.g., shape, size, height, color, distance from the link end (road end), and the like.

The road number may be set differently for each road between branching points depending on the direction (e.g., outbound route, return route). The road attribute data may be road guidance assistance information data which indicates elevated road and underground road information such as whether a road is elevated, is next to an elevated road, is an underground road, or is next to an underground road, and information about the number of vehicle lanes. The road name data may be data for information about expressways, urban expressways, toll roads, public highways (e.g., national highways, prefectural highways, other), and/or information indicating through lanes and access roads of expressways, urban expressways, and toll roads. The road name data may include road type data as well as type internal numbers that are individual number data for each type of road.

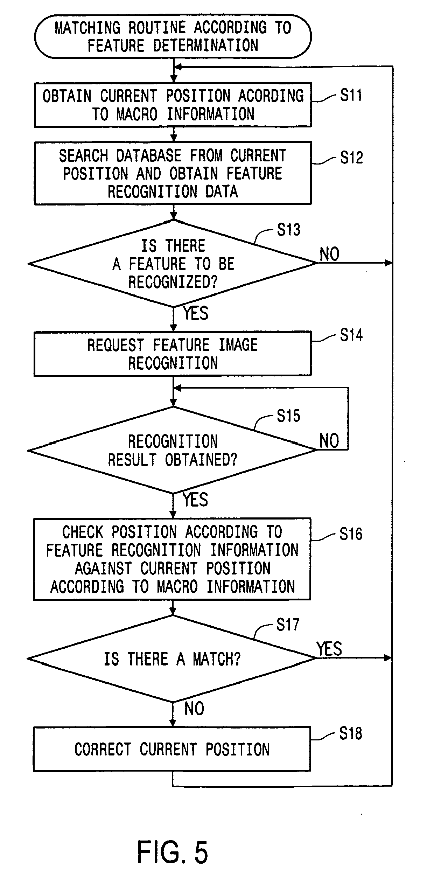

FIG. 5 shows an exemplary micro-matching method using feature determination. The exemplary method may be implemented, for example, by one or more components of the above-described vehicle current position information management system. However, even though the exemplary structure of the above-described vehicle current position information management system may be referenced in the description, it should be appreciated that the referenced structure is exemplary, and the exemplary method need not be limited by any of the above-described exemplary structure.

First, as shown in FIG. 5, for example, when the current position according to macro information is obtained (step S 11), the database may be searched from the current position and the feature recognition data may be obtained (step S12). Then it is determined whether there is a feature to be recognized (step S 13). If there is no feature to be recognized (step S 13 = NO), the process returns to step S11 and the same steps are repeated. If there is a feature to be recognized (step S 13 = YES), image recognition of the feature is requested to the image recognition device 8 (step S 14).

Next a recognition result is obtained from the image recognition device 8 (step S15), and the current position obtained from the feature recognition information is then checked against the current position according to macro information (step S16). If the current position obtained from the feature recognition information matches the current position according to macro information (step S 16 = YES), the process returns to step S11. If the current position according to macro information does not match (step S16 = NO), however, it is corrected based on the current position obtained from the feature recognition information (step S18).

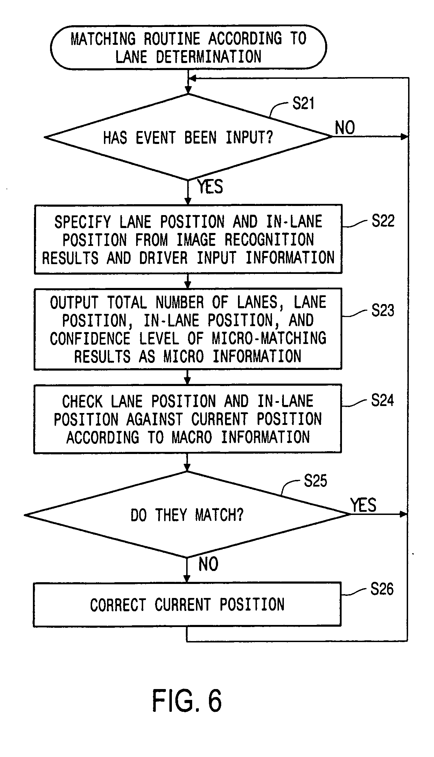

FIG. 6 shows an exemplary micro-matching method using lane determination. The exemplary method may be implemented, for example, by one or more components of the above-described vehicle current position information management system. However, even though the exemplary structure of the above-described vehicle current position information management system may be referenced in the description, it should be appreciated that the referenced structure is exemplary, and the exemplary method need not be limited by any of the above-described exemplary structure.

As shown in FIG. 6, for example, when an event is input from the driver input information managing portion 9 and an event is input from the image recognition device 8 (step S21), the lane position and in-lane position may be specified from the image recognition results and the driver input information (step S22). The total number of lanes, lane position, in-lane position, and confidence level of the micro-matching results may then be output as micro information (step S23). Next, the lane position and in-lane position may be checked against the current position according to the macro information (step S24), and it is determined whether the lane position and in-lane position match the current position according to the macro information (step S25). If the lane position and in-lane position match the current position according to macro information (step S25 = YES), the process returns to step S21. If it does not match (step S25 = NO), the current position according to the macro information is corrected based on the lane position and in-lane position (step S26).

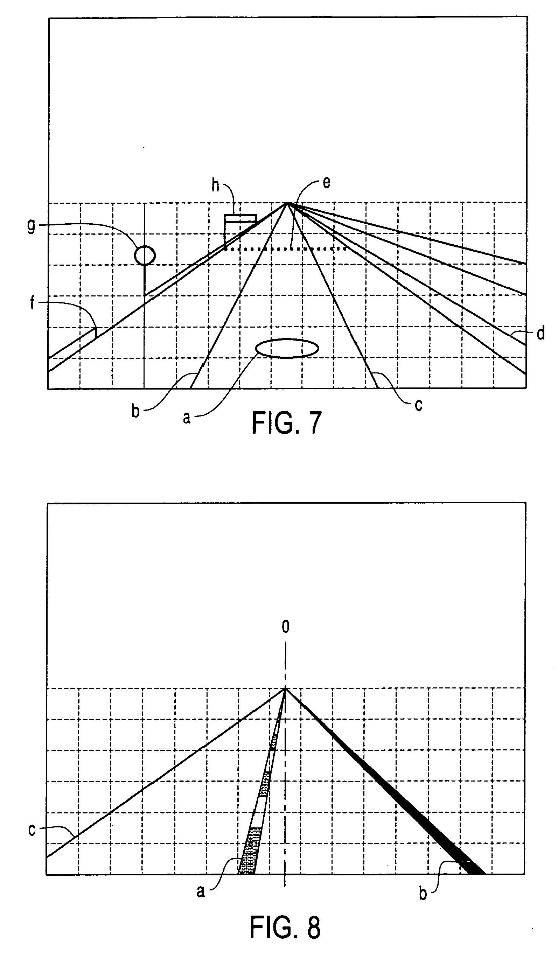

FIG. 7 is a view showing an example of various features and paint. As shown in FIG. 7, the various features and paint indications may include, for example, a manhole (a), lanes (b and c), a median or center line (d), a stop line (e), a sidewalk step (f), a road sign (g), and/or a traffic signal (h). These features may be recognized from the shapes of their images and the current position can be obtained from their corresponding recognized positions. The recognized positions of, for example, features and paint may be recognized by the position on a grid when an image of one or more of the features and/or paint indications is divided by a grid indicated with dotted lines. The recognized positions of, for example, features and paint may be specified by the field angle of features and paint and the like to be targeted. Further, the lane position, in-lane position, and crossing state can be determined from the position of the bottom point of the lane marking (white line) a, the center line b, and the road shoulder c on the image, as shown in, for example, FIG. 8.

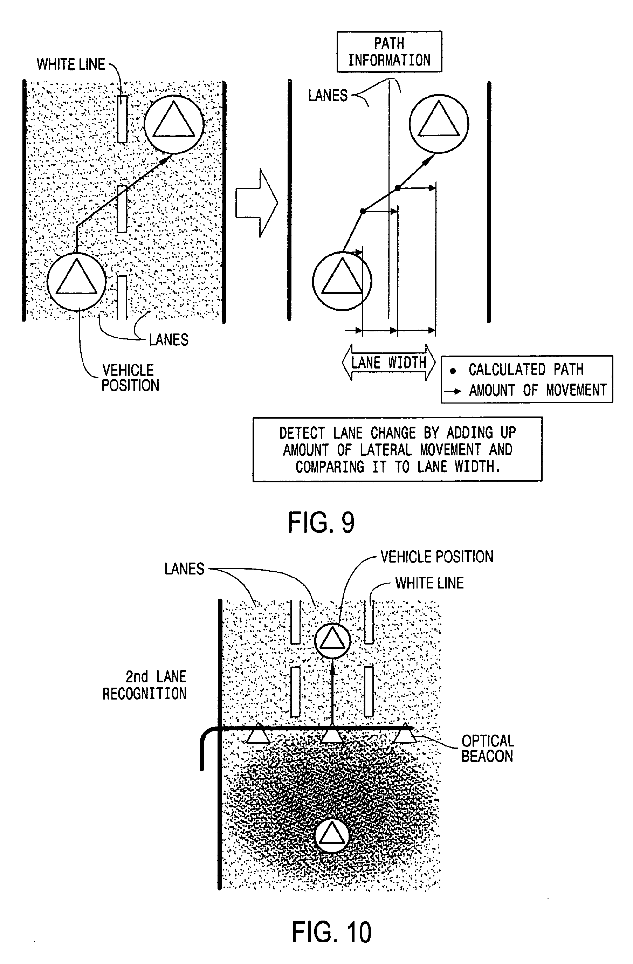

Even if the image recognition device 8 is unable to be used, the calculated path and/or an optical beacon can still be used to determine the lane position, in-lane position, and crossing state. FIG. 9 is a view illustrating a determination example of the lane position, in-lane position, and crossing state using a calculated path. FIG. 10 is a view illustrating a determination example of the lane position, in-lane position, and crossing state using an optical beacon.

In a case where the calculated path is used, as shown in FIG. 9, for example, by monitoring the calculated information (e.g., the path or the amount of left-right movement) with the current position managing portion 4, (e.g., by adding up the amount of movement in the width direction of the lane and comparing it to the lane width), a determination of a lane change can be made if the amount of movement is equal to the lane width, and at a half-way point between lanes a determination of a crossing state can be made. A correction may also be made to compensate for the in-lane position being toward the left or toward the right.

The information related to the lane is included in the optical beacon, so the optical beacon shown in FIG. 10 can be used irrespective of whether or not there is a camera and image recognition device. Moreover, with image recognition there are also cases in which the total number of lanes is unable to be identified, so optical beacon information is given priority. Also, the final lane determination result is determined by combining the current determined lane position and the optical beacon information. If the information does not match up, the confidence level may be lowered, for example.

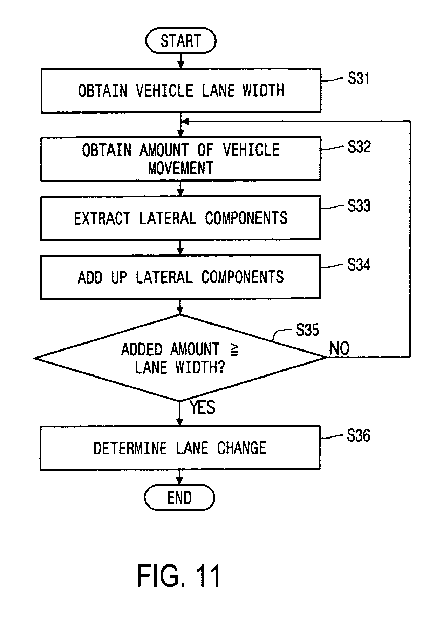

FIG. 11 shows an exemplary lane position correction method. The exemplary method may be implemented, for example, by one or more components of the above-described vehicle current position information management system. However, even though the exemplary structure of the above-described vehicle current position information management system may be referenced in the description, it should be appreciated that the referenced structure is exemplary, and the exemplary method need not be limited by any of the above-described exemplary structure.

As shown in FIG. 11, for example, after a vehicle lane width is obtained (step S31), an amount of vehicle movement may be obtained (step S32), whereby lateral components may be extracted (step S33), and the extracted lateral components may be added up (step S34). Then, it may determined whether the added amount of the lateral components is equal to or more than the lane width (step S35). If the added amount is equal to or more than the lane width (step S35 = YES), it may be determined that a lane change has been made (step 36). If it is determined in step S35 that the added amount is less than the lane width (step S35 = NO), the process returns to step S32.

The determination of the lane change can also be applied to the determination of a movement direction at a narrow-angled branch point, such as, for example, lane may be set, and a change direction of the lane is recognized. Thus, the road on which the host vehicle is traveling may be identified.

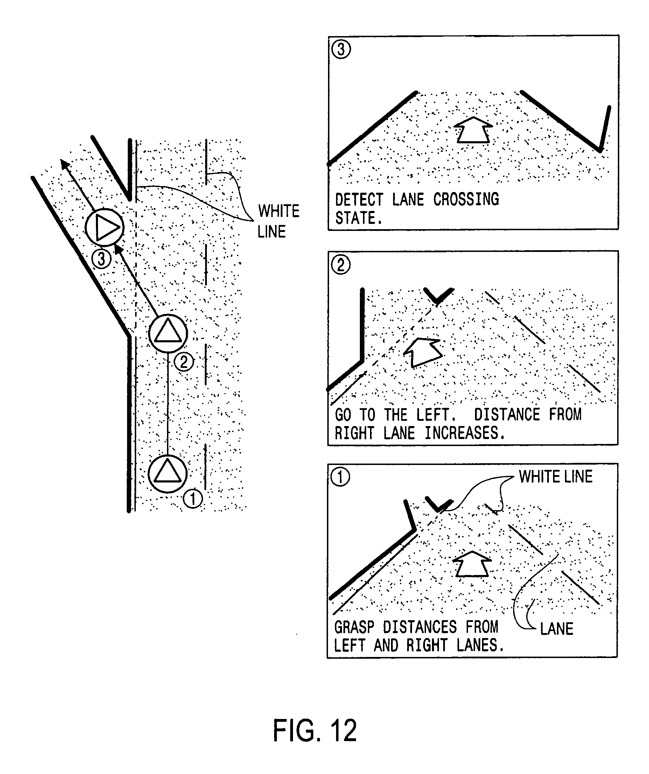

As shown in FIG. 12, for example, if a left-side white line is taken as a target object, the determination of the narrow-angled branch point may be made according to the following steps: while monitoring the distances from the left and right lanes (step 1); the distance from the right lane increases as the vehicle goes to the left (step 2); and a lane crossing state is detected (step 3). Alternatively, if the recognition and the determination of the movement direction are made regarding a sigh or an attention light, a similar determination can be made.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

For example, in the examples described above, the lane change is detected by adding up the amount of movement in the left-right direction of the lane. However, the in-lane position and the number of increased/decreased lanes may also be detected.

Furthermore, although the vehicle current position information management system is described as being composed of a micro-matching processing portion 1, a macro-matching processing portion 2, a dead-reckoning navigation processing portion 3, a current position managing portion 4, a vehicle control unit 5, a vehicle information processing unit 6, an image recognition device 8, a driver input information managing unit 9, a position checking and correcting portion 11, a feature determining portion 12, a micro-matching results portion 13, and a lane determining portion 14, one or more of the components may be further divided and/or combined as necessary. For example, each component may be implemented using a controller and or a memory, such as, for example, a CPU or by a program stored in a storage medium.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A current position information management system for a vehicle, comprising:
a memory (7) that stores map data; and
a controller (1,2,3,4) that:
detects a current position of the vehicle using dead-reckoning navigation;
based on the detected current position, monitors a left-right position of the vehicle relative to a lane in which the vehicle is traveling;
adds up an amount of movement in the left-right direction; and
detects a lane change by comparing the added up amount of movement with the lane's width, the lane's width stored in the memory.

2. The system of claim 1, wherein the controller:
calculates a path traveled by the vehicle based on the dead-reckoning;
compares the calculated path with the stored map data; and
detects the current position of the vehicle by matching the calculated path with the calculated path.

3. The system of claim 1 or 2, wherein the controller:
corrects the detected current position in accordance with the detected lane change.

4. The system of any one of claims 1 to 3, wherein the controller:
compares the lane's width with the added up amount of movement; and
detects an in-lane position based on the lane's width and the added up amount of movement.

5. The system of any one of claims 1 to 4, wherein the controller detects a current position of the vehicle by detecting a sidewalk step.

6. The system of any one of claims 1 to 5, wherein the controller detects a current position of the vehicle based on a signal received from an optical beacon.

7. The system of any one of claims 1 to 6, wherein the controller detects a current position of the vehicle based on the location of a road sign or traffic signal.

8. The system of any one of claims 1 to 7, wherein the controller detects a current position of the vehicle based on the location of a painted line.

9. The system of any one of claims 1 to 8, wherein the lane change occurs at a narrow-angle branch point.
